(19) **Europäisches Patentamt**

**European Patent Office**

**Office européen des brevets**

(11) **EP 0 889 250 B1**

(12) **EUROPÄISCHE PATENTSCHRIFT**

(45) Veröffentlichungstag und Bekanntmachung des Hinweises auf die Patenterteilung:
**31.10.2001   Patentblatt 2001/44**

(51) Int Cl.[7]: **F16B 13/06**, F16B 13/08, F16B 13/00

(21) Anmeldenummer: **98810409.7**

(22) Anmeldetag: **06.05.1998**

(54) **Hinterschnittdübel**

Anchor

Cheville

(84) Benannte Vertragsstaaten:
**CH DE FR GB LI**

(30) Priorität: **18.06.1997  DE 19725723**

(43) Veröffentlichungstag der Anmeldung:
**07.01.1999   Patentblatt 1999/01**

(73) Patentinhaber: **HILTI Aktiengesellschaft**
**9494 Schaan (LI)**

(72) Erfinder: **Raber, Stefan, Dr.**
**86916 Kaufering (DE)**

(74) Vertreter: **Wildi, Roland et al**
**Hilti Aktiengesellschaft**
**Patentabteilung**
**9494 Schaan (LI)**

(56) Entgegenhaltungen:
**FR-A- 2 176 390         US-A- 2 842 999**
**US-A- 4 702 654         US-A- 4 919 579**
**US-A- 4 971 494**

**Beschreibung**

Die Erfindung betrifft einen Hinterschnittdübel gemäss dem Oberbegriff des Patentanspruchs 1.

In der Befestigungstechnik besteht vielfach der Wunsch nach weitgehend spreizdruckfreien Befestigungen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Dazu wird eine zunächst zylindrisch gebohrte Aufnahmebohrung in einer definierten Tiefe mit einer Hinterschneidung versehen. Das in die vorbereitete Aufnahmebohrung einsetzbare Befestigungselement umfasst eine Ankerstange mit einem sich zum freien Vorderende konusförmig erweiternden Kopfteil und eine Hülse mit durch axiale Schlitze voneinander getrennten, ausstellbaren Segmenten. Die Ankerstange ist durch die axiale Durchgangsbohrung der Hülse geführt. Durch eine Relativverschiebung zwischen der Hülse und der Ankerstange sind die entlang des Kopfteils abgleitenden Segmente radial in die Hinterschneidung ausstellbar. Zur Herstellung der Hinterschneidung wird vielfach ein spezielles Gerät eingesetzt, das mit in der Aufnahmebohrung exzentrisch umlaufenden Schneiden ausgestattet ist, mit denen die Hinterschneidung in die Bohrlochwandung gefräst wird.

Aus der US-A-4,702,654 ist ein Hinterschnittdübel bekannt, der eine einen Konus aufweisende Ankerstange und eine Hülse umfasst, die an ihrem in Setzrichtung vorderen Ende mit radial ausstellbaren Schneidsegmente ausgestattet ist. Die Schneidsegmente erstrecken sich von einem plastischen Gelenk in Richtung des Konus am Vorderende der Ankerstange und sind an ihrer Aussenseite mit Schneiden versehen. Bei der Montage dieses bekannten Hinterschnittdübels stützt sich die Ankerstange am Grund der Aufnahmebohrung ab. Die Hülse wird drehend auf den Konus aufgeschoben. Dabei werden die Schneidsegmente radial ausgestellt und ihre Schneiden bearbeiten die Wandung der Aufnahmebohrung abrasiv.

Das Ausmass, in dem die Segmente bei Verankerung radial ausgestellt werden, hängt von der Konizität bzw. vom Konuswinkel des Kopfteils ab. Für die Erzielung möglichst spreizdruckfreier Befestigungen sind grosse Konuswinkel des Kopfteils von Vorteil. Andererseits verbreitern sich die axialen Schlitze beim radialen Ausstellen der Segmente. Die ausgestellten Segmente decken nur einen Teil der Fläche der Hinterschneidung ab. Mit steigendem Konuswinkel vergrössert sich die für die Lasteinleitung nicht nutzbare Fläche zwischen den radial ausgestellten Segmenten. Daher kann nicht die gesamte Hinterschnittfläche im Untergrund für die Einleitung einer äusseren Last genutzt werden und sind die höchstzulässigen Lastwerte kleiner, als aufgrund der im Untergrund verfügbaren Hinterschnittfläche möglich wäre.

Aufgabe der vorliegenden Erfindung ist es daher, einen Hinterschnittdübel dahingehend zu verbessern, dass die im Untergrund verfügbare Hinterschnittfläche besser für die Lasteinleitung genutzt werden kann und die Lastwerte gegenüber einem konventionellen Hinterschnittdübel erhöht werden können.

Die Lösung die Aufgabe besteht in einem Hinterschnittdübel mit den im kennzeichnenden Abschnitt des Patentanspruchs 1 angeführten Merkmalen. Insbesondere wird durch die Erfindung ein Hinterschnittdübel geschaffen, der eine Ankerstange umfasst, die einen Schaft mit einem sich in Setzrichtung konusförmig erweiternden Kopfteil aufweist, und eine den Schaft umgebende Hülse besitzt, die an ihrem dem Kopfteil zugewandten Spreizabschnitt mit voneinander getrennten Spreizsegmenten versehen ist. Die Spreizsegmente erstrecken sich von einem plastischen Gelenk in Richtung des Kopfteils und sind durch eine axiale Relativverschiebung zwischen dem Kopfteil und der Hülse radial ausstellbar. Benachbarte Spreizsegmente überdecken sich im unverspreizten Ausgangszustand wenigstens über einen Teil ihrer Längserstreckung. Beim radialen Ausstellen der Spreizsegmente ist die Überdeckung verringerbar.

Indem sich die Spreizsegmente im unverspreizten Ausgangszustand wenigstens über einen Teil ihrer Längserstreckung an ihren Längskanten überdecken, wird die im Untergrund verfügbare Hinterschnittfläche besser ausgenützt. Die anfängliche Überdeckung der Spreizsegmente verringert sich beim Ausstellen der Spreizsegmente kontinuierlich. In der radial ausgestellten Endlage der Spreizsegmente kann immer noch eine Überdeckung vorhanden sein; die Überdeckung kann aber auch vollständig aufgehoben sein. In jedem Fall ist gegenüber den konventionellen Hinterschnittdübeln der Abstand zwischen den Spreizsegmenten verringert bzw. gänzlich beseitigt. Die Spreizsegmente überdecken einen grösseren Teil der Hinterschnittfläche, der für die Lasteinleitung zur Verfügung steht. Aufgrund der grösseren nutzbaren Fläche wird bei Belastung die zulässige Flächenpressung des Untergrunds erst bei einer höheren Last erreicht als bei den Hinterschnittdübeln des Stands der Technik. Durch die sich im Ausgangszustand wenigstens teilweise überdeckenden Spreizsegmente kann daher bei gleichbleibender Hinterschnittgeometrie gegenüber den bekannten Hinterschnittdübeln eine Laststeigerung erzielt werden.

Mit Vorteil weisen die Spreizsegmente eine zu ihrem freien Vorderende hin zunehmende Überdeckung auf. Damit wird dem Umstand Rechnung getragen, dass sich die Krümmungsradien des konusförmigen Kopfteils zum vorderen Ende hin vergrössern. Entsprechend entfernen sich die Längskanten benachbarter Spreizsegmente beim radialen Ausstellen an den vorderen Endbereichen der Spreizsegmente in Umfangsrichtung weiter voneinander als in den dem plastischen Gelenk näheren Bereichen. Durch die erfindungsgemäss zum freien Vorderende hin zunehmende Überdeckung wird diese über die axiale Erstreckung der Spreizsegmente unterschiedliche Öffnung in Umfangsrichtung kompensiert.

Bevorzugt ist die Überdeckung der Spreizsegmente derart dimensioniert, dass die Längskanten der Spreizsegmente in ihrer vollständig radial ausgestellten Endlage weitgehend spaltfrei aneinandergrenzen, wobei die Überdeckung benachbarter Spreizsegmente aufgehoben ist. Bei dieser geometrischen Auslegung der Spreizsegmente ist die Breite der zwischen den Segmenten befindlichen Schlitze gleich Null. Die ausgestellten Spreizsegmente bilden eine geschlossene, im wesentlichen konusförmige Fläche, die mit der Hinterschnittfläche weitgehend übereinstimmt. Dadurch kann die gesamte im Untergrund vorhandene Hinterschnittfläche für die Lasteinleitung genutzt werden. Die dabei an den freien Vorderenden gemessene grösste Überdeckung benachbarter Spreizsegmente hängt von der Anzahl der Spreizsegmente sowie vom kleinsten und vom grössten Krümmungsradius des im wesentlichen konusförmigen Kopfteils ab. Näherungsweise kann die grösste Überdeckung durch die Gleichung

$$I = (1/n) \cdot 2\pi \cdot (R\text{-}r)$$

beschrieben werden, wobei I die Überdeckung der Spreizsegmente an ihren Längskanten ist, n die Anzahl der Spreizsegmente bezeichnet, und R bzw. r für den grössten bzw. den kleinsten Krümmungsradius des Kopfteils stehen.

Indem die Wandstärke der Spreizsegmente vom plastischen Gelenk zu ihrem freien Vorderende hin abnimmt, ist die Verformbarkeit der vorderen Bereiche der Spreizsegmente erhöht. Dadurch können sie sich besser an die Form des sich in Setzrichtung zum Vorderende erweitemden Kopfteils angleichen. Dies ist insbesondere bei Kopfteilen von Vorteil, deren Aussenfläche einen trompetenförmigen Verlauf aufweist. Als zweckmässig erweisen sich dabei Verhältnisse der Wandstärken der Spreizsegmente am plastischen Gelenk und am freien Vorderende von etwa 1,5 : 1 bis zu 10 : 1, vorzugsweise 2 : 1 bis zu 5 : 1.

Die Wandstärkenänderung der Spreizsegmente wird bevorzugt durch Kaltumformung hergerstellt, wobei ihre freien Vorderenden vorzugsweise kaltverfestigt werden. Insbesondere wird dabei beispielsweise ein die spätere Hülse bildendes Rohr an einem Ende beispielsweise durch einen Walzprozess zu einer kegelartigen Form erweitert. Dabei wird mit Vorteil bereits auf die Form des Kopfteils abgestellt. Zur Erzeugung der Spreizsegmente wird der kegelartigig erweiterte Bereich geschlitzt. Aufgrund des Umformens ergibt sich am Vorderende der Spreizsegmente eine geringere Wandstärke als im Bereich des plastischen Gelenks. In Umfangsrichtung ist die Wandstärke mit Vorteil konstant. Bei geeigneter Wahl des Werkstoffs für die Hülse wird bei dem Umformprozess eine Kaltverfestigung der umgeformten Bereiche erzielt. Dadurch kann in diesen Bereichen die Verringerung der Wandstärke kompensiert werden. Nach dem Schlitzen der Hülse, beispielsweise durch Sägen oder Scheren, werden die radial abstehenden Spreizsegmente nach innen zurückgebogen, wobei sie an den Längskanten überlappen. Indem im Bereich des plastischen Gelenks zwischen benachbarten Speizsegmenten eine Aussparung vorgesehen ist, wird verhindert, dass sich die Spreizsegmente gegenseitig behindern. Die Aussparung weist auch den Vorteil auf, dass sich der Trennschlitz zwischen benachbarten Spreizsegmenten nicht über das plastische Gelenk hinaus fortsetzt.

In einer alternativen Variante des Hinterschnittdübels gemäss der Erfindung umfasst die Hülse wenigstens zwei konzentrische Rohrabschnitte, die passgenau übereinander geschoben sind. Die Spreizabschnitte des inneren und des äusseren Rohrabschnitts weisen jeweils Spreizsegmente auf, die durch Längsschlitze voneinander getrennt sind. Die Rohrabschnitte sind derart in Umfangsrichtung zueinander verdreht, dass die Spreizsegmente des äusseren Rohrabschnitts die Längsschlitze zwischen den Spreizsegmenten des inneren Rohrabschnitts überdecken. Die Anzahl der ineinander geschobenen Rohrabschnitte kann auch grösser als zwei sein. Die Geometrie der Spreizsegmente des inneren bzw. des äusseren Rohrabschnitts kann variieren. Aus Symmetrieüberlegungen sind die Spreizsegmente gleichartig ausgebildet. Die Spreizsegmente des inneren bzw. des äusseren Rohrabschnitts können im Kaltumformprozess hergestellt sein. Die Wandstärke der Spreizsegmente kann zu ihrem freien Ende hin abnehmen; sie kann auch konstant sein.

Um für alle Spreizsegmente gleiche Verhältnisse beim radialen Ausstellen zu gewährleisten, ist es von Vorteil, wenn die Überdeckung benachbarter Spreizsegmente derart gewählt ist, dass eine der Längskanten eines Spreizsegments sichtbar und seine zweite Längskante überdeckt ist. Bei der gewählten Anordnung der Spreizsegmente sind alle gleichwertig und es gibt keine bevorzugt radial ausweichenden Bereiche der Hülse. Diese geometrische Auslegung der Hülse und der Überdeckung erweist sich insbesondere von Vorteil für selbstschneidende Hinterschnittdübel, bei denen die Hülse drehend-schlagend auf das Kopfteil auftreibbar ist. Dabei ist die in Drehrichtung vorlaufende Längskante eines Spreizsegments die sichtbare Längskante. Besonders vorteilhaft ist es, wenn die in Drehrichtung vorlaufende Längskante wenigstens eines der Spreizsegmente mit Schneiden ausgestattet ist. In diesem Fall wird der radiale Überstand der vorlaufenden Längskante für den Materialabtrag im Untergrund genutzt. Die Schneide an der Längskante wenigstens eines der Spreizsegmente unterstützt die Bearbeitung der Bohrungswandung bei der Rotation der Hülse. Zweckmässigerweise sind alle Spreizsegmente an ihren vorlaufenden Längskanten mit Schneiden ausgestattet.

Im folgenden wird die Erfindung unter Bezugnahme auf die in den schematischen Zeichnungen dargestellten Ausführungsbeispiele näher erläutert. Es zeigen:

Fig. 1      ein erstes Ausführungsbeispiel eines erfindungsgemässen Hinterschnittdübels im ungesetzten Zustand;

Fig. 2      eine Ansicht des Hinterschnittdübels gemäss Pfeil II in Fig. 1;

Fig. 3      den Hinterschnittdübel aus Fig. 1 im gesetzten Zustand;

Fig. 4      eine Ansicht des Hinterschnittdübels gemäss Pfeil IV in Fig. 3;

Fig. 5      ein zweites Ausführungsbeispiel eines erfindungsgemässen Hinterschnittdübels im gesetzten Zustand;

Fig. 6      einen schematischen Querschnitt des Spreizbereichs der Hülse eines dritten Ausführungsbeispiels des Hinterschnittdübels; und

Fig. 7      eine Variante eines Spreizsegments.

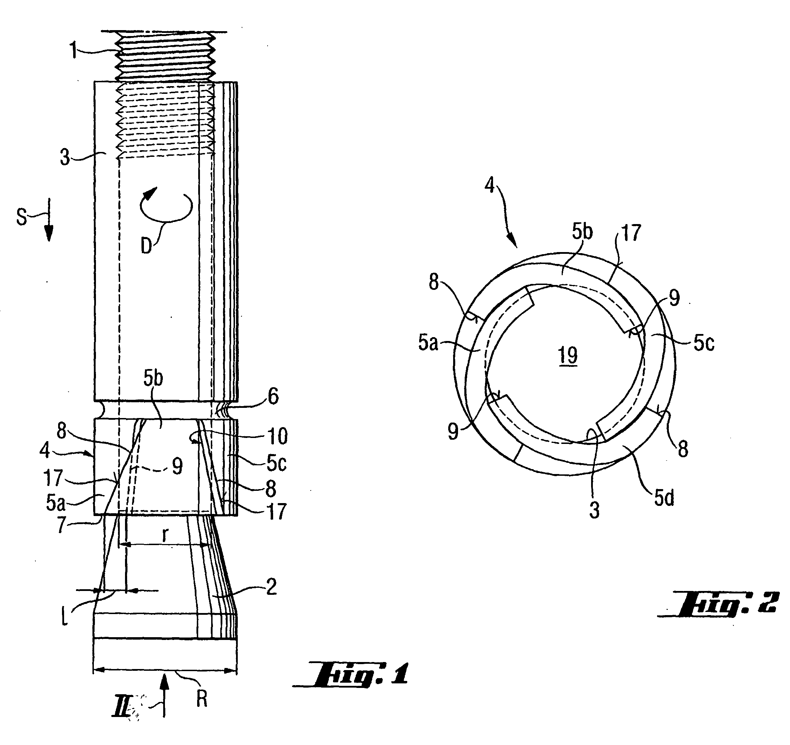

Das in Fig. 1 dargestellte Ausführungsbeispiel des erfindungsgemässen Hinterschnittdübels umfasst eine Ankerstange mit einem Schaft 1, an dessen einem Ende ein Kopfteil 2 angeordnet ist, das sich in Setzrichtung S im wesentlichen konisch erweitert An ihrem gegenüberliegenden Endbereich ist der Schaft 1 der Ankerstange mit Lastangriffsmitteln, beispielsweise einem Aussengewinde, ausgestattet. Auf dem Schaft ist eine Hülse 3 axial verschieblich gelagert. An ihrem dem Kopfteil 2 zugewandten vorderen Bereich besitzt die Hülse 3 einen Spreizabschnitt 4. Der Spreizabschnitt 4 wird von Spreizsegmenten 5a - 5d gebildet, die sich von einem in der Mantelfläche der Hülse 3 vorgesehenen plastischen Gelenk 6 in Richtung des Kopfteils 2 erstrecken und durch im wesentlichen in axialer Richtung verlaufende Längsschlitze 10 voneinander getrennt sind. Das plastische Gelenk 6 wird beispielsweise von einer umlaufenden Nut im Mantel der Hülse 3 gebildet. Die Spreizsegmente 5 sind durch eine Relativbewegung zwischen dem mit dem Kopfteil 2 verbundenen Schaft 1 und der Hülse 3, wobei der Spreizabschnitt 4 der Hülse 3 auf das konusförmige Kopfteil 2 aufgetrieben wird, radial ausstellbar. Der Ausstellwinkel hängt von Konuswinkel des Kopfteils 2 ab.

Wie aus der Fig. 1 ersichtlich, überlappen einander benachbarte Spreizsegmente 5a, 5b bzw. 5b, 5c bzw. 5c, 5d bzw. 5d, 5a, indem sich ihre jeweils benachbarten Längs- kanten 8, 9 überdecken. Gemäss dem dargestellten Ausführungsbeispiel weist dabei jedes Spreizsegment eine sichtbare Längskante 8 und eine vom benachbarten Spreizsegment überdeckte Längskante 9 auf. Im Hinblick auf einen selbstschneidenden Hinterschnittdübel, der drehend-schlagend auf das konusförmige Kopfteil 2 aufgetrieben wird und sich bei der Rotation der Hülse in der Bohrungswandung eine Hinterschneidung erzeugt, bezeichnet 8 die in Drehrichtung D vorlaufende Seitenkante und 9 die überdeckte nachlaufende Seitenkante eines Spreizsegments 5. Die in Drehrichtung D vorlaufende Seitenkante wenigstens eines der Spreizsegmente 5 oder vorzugsweise aller Spreizsegmente 5 ist mit Schneiden 17 versehen. Die Schneiden 17 können beispielsweise Schneidpartikel aus Hartmetall oder ein auf die Seitenkante 8 aufgebrachter Schweisspunkt sein; sie können aber auch durch die gehärtete, vorlaufende Seitenkante 8 selbst gebildet sein.

Die Überdeckung der Seitenkanten 8, 9 benachbarter Spreizsegmente 5a - 5d ist mit dem Bezugszeichen I angedeutet. Gemäss dem dargestellten Ausführungsbeispiel nimmt die Überdeckung I vom plastischen Gelenk 6 zum freien Vorderende 7 der Spreizsegmente 5 kontinuierlich zu. Die an den freien Vorderenden 7 gemessene grösste Überdeckung I benachbarter Spreizsegmente 5a - 5d hängt von der Anzahl der Spreizsegmente 5a - 5d, sowie vom kleinsten und vom grössten Krümmungsradius des im wesentlichen konusförmigen Kopfteils 2 ab. Näherungsweise kann die grösste Überdeckung durch die Gleichung

$$I = (1/n) \cdot 2\pi \cdot (R\text{-}r)$$

beschrieben werden, wobei I die Überdeckung der Spreizsegmente an ihren Längskanten ist, n die Anzahl der Spreizsegmente bezeichnet, und R bzw. r für den grössten bzw. den kleinsten Krümmungsradius des Kopfteils 2 stehen.

Fig. 2 zeigt eine Draufsicht des unverspreizten Spreizbereichs 4 der Hülse 3 gemäss Pfeil II in Fig. 1. Aus Gründen der Übersichtlichkeit wurde auf die Darstellung der Ankerstange mit Schaft und Kopfteil verzichtet. Die Überdeckung der durch Längsschlitze 10 voneinander getrennten Spreizsegmente 5a - 5d ist ersichtlich. Die in Drehrichtung vorlaufenden, sichtbaren Längskanten 8 der Spreizsegmente 5a - 5d tragen die Schneiden 17. Die Durchgangsbohrung der Hülse 3, durch die der Schaft der Ankerstange geführt ist, ist mit dem Bezugszeichen 19 versehen.

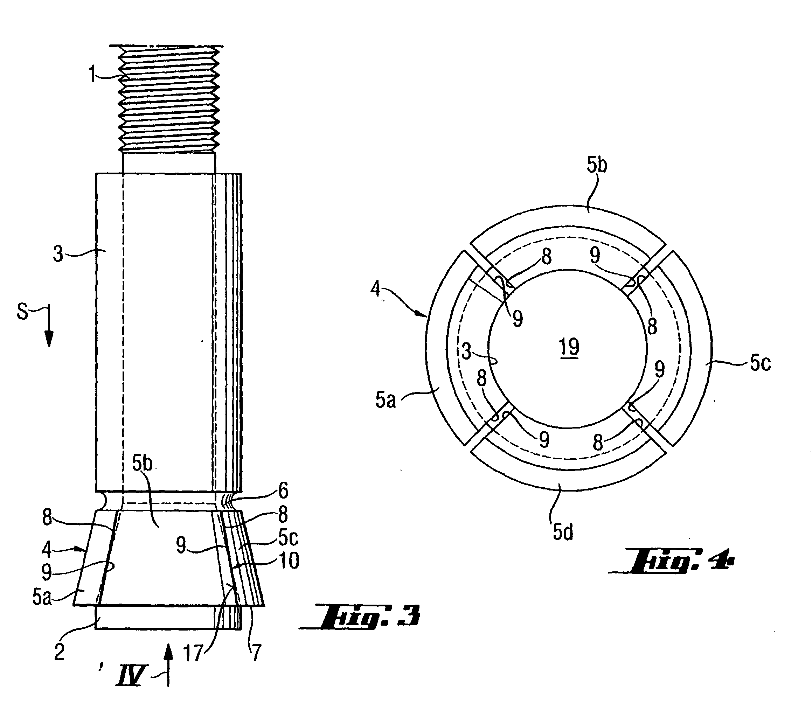

Fig. 3 zeigt den Hinterschnittdübel aus Fig. 1 mit radial vollständig ausgestellten Spreizsegmenten 5a - 5d. Die Überdeckung der Spreizsegmente 5a - 5d ist derart dimensioniert, dass im gesetzten Zustand die Längskanten 8, 9 benachbarter Spreizsegmente aneinander angrenzen. Die Überdeckung ist aufgehoben und die Breite der Längsschlitze zwischen den Spreizsegmenten 5a - 5d ist im Idealfall gleich Null. Dadurch bilden die radial ausgestellten Spreizsegmente 5a - 5d eine im wesentlichen geschlossene Fläche, die weitgehend mit der Geometrie der Hinterschnittfläche im Untergrund übereinstimmt.

Fig. 4 zeigt eine Ansicht des Spreizbereichs 4 der Hülse 3 gemäss Pfeil IV in Fig. 3. Die Ansicht entspricht derjenigen in Fig. 2, einschliesslich des Verzichts auf die Darstellung des Schafts und des Kopfteils der Ankerstange, so dass die mit dem Bezugszeichen 19 versehene Durchgangsbohrung der Hülse sichtbar ist. Die einander nicht mehr überdeckenden Spreizsegmente 5a - 5d grenzen mit ihren Längskanten 8, 9 aneinander. Zur Verdeutlichung sind die Längsschlitze 10 zwischen den Spreizsegmenten 5a - 5d verbreitert dargestellt. Dies kann durchaus den realen Gegebenheiten entsprechen. Im erwünschten Idealfall nähert sich die Breite der Längsschlitze jedoch dem Wert Null.

Das in Fig. 5 dargestellte weitere Ausführungsbeispiel des erfindungsgemässen Hinterschnittdübels enspricht weitgehend dem Ausführungsbeispiel aus Fig. 1 - 4. Der . Hinterschnittdübel ist im gesetzten Zustand dargestellt, in dem der Spreizbereich 4 der Hülse 3 vollständig auf das am Vorderende der Ankerstange 1 vorgesehene konische Kopfteil 2 aufgetrieben ist. Die Spreizsegmente 5a - 5c und das für den Betrachter nicht sichtbare Spreizsegment 5d sind im radial vollständig ausgestellten Zustand dargestellt, in dem die Längskanten der Spreizsegmente 5a - 5d einander nicht mehr überdecken. Der Unterschied zum Ausführungsbeispiel gemäss Fig. 1 - 4 besteht darin, dass im Bereich des plastischen Gelenks 6 zwischen benachbarten Spreizsegmenten jeweils eine Aussparung 18 vorgesehen ist. Die Aussparung 18 soll verhindern, dass die Speizsegmente 5a - 5d einander im Ausgangszustand, in dem die Längskanten einander überdecken, gegenseitig behindern. Zugleich verhindern die Aussparungen 18, dass sich die Längsschlitze 10 zwischen den Spreizsegmenten 5a - 5d über das plastische Gelenk 6 hinaus in die Hülse 3 fortsetzen.

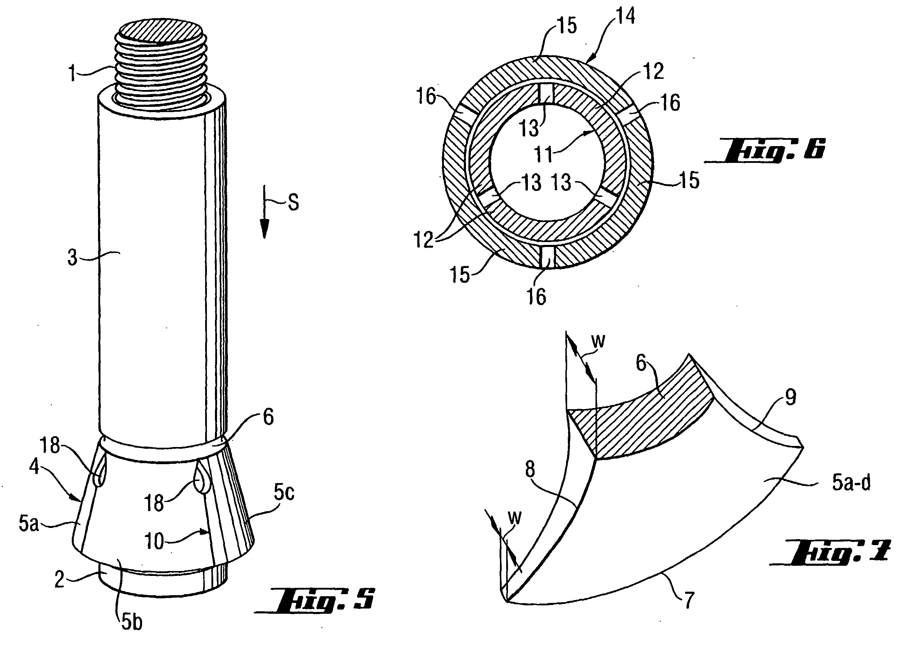

Der in Fig. 6 dargestellte Querschnitt des Spreizbereichs eines weiteren Ausführungsbeispiels der Hülse eines erfindungsgemässen Hinterschnittdübels umfasst beispielsweise zwei konzentrische Rohrabschnitte 11 bzw. 14. Dabei ist ein äusserer Rohrabschnitt 14 auf einen inneren Rohrabschnitt 11 geschoben. In der Schnittdarstellung in Fig. 6 ist aus Verständnisgründen zwischen den Rohr- abschnitten 11, 14 ein kleiner Abstand dargestellt. Es versteht sich jedoch, dass in Realität die Innenwandung des äusseren Rohrabschnitts 14 und die Aussenwandung des inneren Rohrabschnitts 11 passgenau aneinanderliegen. Der innere Rohr- abschnitt 11 weist durch Längsschlitze 13 voneinander getrennte innere Spreiz- segmente 12 auf. Der äussere Rohrabschnitt 14 besitzt eine entsprechende Anzahl von äusseren Spreizsegmenten 15, die durch Längsschlitze 16 voneinander getrennt sind. Der innere Rohrabschnitt 11 und der äussere Rohrabschnitt 14 sind derart zueinander verdreht, dass die äusseren Spreizsegmente 15 die Längsschlitze 13 zwischen den inneren Spreizsegmenten 12 überdecken. Auf diese Weise sind die Spreizsegmente 11 bzw. 14 abwechselnd innen und aussen angeordnet.

Fig. 7 zeigt eine Variante eines Spreizsegments 5. Insbesondere ist ersichtlich, dass sich die Wandstärke w des Spreizsegments 5 vom plastischen Gelenk 6 zum freien Vorderende 7 kontinuierlich verringert. Die Wandstärken der Spreizsegmente am plastischen Gelenk und am freien Vorderende stehen im Verhältnis von etwa 1,5 : 1 bis zu 10 : 1, vorzugsweise 2 : 1 bis zu 5 : 1. In Umfangsrichtung ist die Wandstärke von der einen Seitenkante 8 zur anderen Seitenkante 9 des Spreizsegments 5 beispielsweise konstant dargestellt.

Gemäss den dargestellten Ausführungsbeispielen weisen alle Spreizsegmente eines Spreizbereichs im wesentlichen die gleiche Geometrie auf. Dies ist jedoch nicht zwingend erforderlich. Sie können auch unterschiedlich geformt sein, beispielweise indem die Längsschlitze über den Umfang des Spreizabschnittes nicht gleichverteilt oder gekrümmt ausgebildet sind. Die Längsseiten der Spreizsegmente können, wie in den Ausführungsbeispielen angedeutet, im wesentlichen radial orientierte Flächen aufweisen, wobei benachbarte Spreizsegmente an ihren Längsseiten jeweils parallel zueinander verlaufende Flächen aufweisen. Die Spreizsegmente können auch Längsseiten aufweisen, deren Flächen unter einem stumpfen bzw. einem spitzen Winkel in die Aussenflächen der Spreizsegmente einmünden. Dabei ist es zweckmässig, wenn an den sichtbaren Längskanten spitze Winkel und an den überdeckten Kanten stumpfe Winkel vorgesehen sind, wobei sich die Winkel benachbarter Längskanten zu 180° ergänzen.

Indem sich die Spreizsegmente im unverspreizten Ausgangszustand wenigstens über einen Teil ihrer Längserstreckung an ihren Längskanten überdekken, wird die im Untergrund verfügbare Hinterschnittfläche besser ausgenützt. Die anfängliche Überdeckung der Spreizsegmente verringert sich beim Ausstellen der Spreizsegmente kontinuierlich. In der radial ausgestellten Endlage der Spreizsegmente kann immer noch eine Überdeckung vorhanden sein; die Überdeckung kann aber auch vollständig aufgehoben sein. In jedem Fall ist gegenüber den konventionellen Hinterschnittdübeln der Abstand zwischen den Spreizsegmenten verringert bzw. gänzlich beseitigt. Die Spreizsegmente überdekken einen grösseren Teil der Hinterschnittfläche, der für die Lasteinleitung zur Verfügung steht. Aufgrund der grösseren nutzbaren Fläche wird bei Belastung die zulässige Flächenpressung des Untergrunds erst bei einer höheren Last erreicht als bei den Hinterschnittdübeln des Stands der Technik. Durch die sich im Ausgangszustand wenigstens teilweise überdeckenden Spreizsegmente kann daher bei gleichbleibender Hinterschnittgeometrie gegenüber den bekannten Hinterschnittdübeln eine Laststeigerung erzielt werden.

**Patentansprüche**

1. Hinterschnittdübel umfassend eine Ankerstange, die einen Schaft (1) mit einem sich in Setzrichtung (S) konusförmig erweiternden Kopfteil (2) aufweist, und eine den Schaft (1) umgebende Hülse (3), die an ihrem dem Kopfteil (2) zugewandten Spreizabschnitt (4) mit voneinander getrennten Spreizsegmenten (5a - 5d) versehen ist, die sich von einem plastischen Gelenk (6) in Richtung des Kopfteils (2) erstrecken und durch eine axiale Relatiwerschiebung zwischen dem Kopfteil (2) und der Hülse (3) radial ausstellbar sind, **dadurch gekennzeichnet, dass** sich benachbarte Spreizsegmente (5a, 5b; 5b, 5c; 5c, 5d; 5d, 5a) im unverspreizten Ausgangszustand wenigstens über einen Teil ihrer Längserstreckung an ihren Längskanten (8, 9) überdecken, wobei die Überdeckung (I) bei radialer Ausstellung der Spreizsegmente (5a - 5d) verringerbar ist.

2. Hinterschnittdübel nach Anspruch 1, **dadurch gekennzeichnet, dass** die Spreizsegmente (5a - 5d) eine zu ihrem freien Vorderende (7) hin zunehmende Überdeckung (I) aufweisen.

3. Hinterschnittdübel nach Anspruch 2, **dadurch gekennzeichnet, dass** die Überdeckung (I) der Spreizsegmente (5a - 5d) derart gewählt ist, dass die Längskanten (8, 9) der Spreizsegmente (5a - 5d) in ihrer vollständig radial ausgestellten Endlage weitgehend spaltfrei aneinandergrenzen, wobei die Überdeckung (I) benachbarter Spreizsegmente aufgehoben ist.

4. Hinterschnittdübel nach einem der vorangehenden Ansprüche, **dadurch gekennzeichnet, dass** die Wandstärke (w) der Spreizsegmente (5a - 5d) vom plastischen Gelenk (6) zu ihrem freien Vorderende (7) hin abnimmt.

5. Hinterschnittdübel nach Anspruch 4, **dadurch gekennzeichnet, dass** die Wandstärken (w) der Spreizsegmente (5a - 5d) am plastischen Gelenk (6) und am freien Vorderende (7) im Verhältnis von etwa 1,5 : 1 bis zu 10 : 1, vorzugsweise 2 : 1 bis zu 5 : 1, stehen.

6. Hinterschnittdübel nach Anspruch 4 oder 5, **dadurch gekennzeichnet, dass** die Wandstärkenänderung der Spreizsegmente (5a - 5d) durch Kaltumformung hergestellt ist, wobei ihre freien Vorderenden (7) vorzugsweise kaltverfestigt sind.

7. Hinterschnittdübel nach einem der Ansprüche 1 - 6, **dadurch gekennzeichnet, dass** die Hülse (3) wenigstens zwei konzentrische Rohrabschnitte (11, 14) umfasst, welche Spreizabschnitte mit durch Längsschlitze (13, 16) voneinander getrennten Spreizsegementen (12, 15) aufweisen, wobei die Rohr- abschnitte (11, 14) derart in Umfangsrichtung zueinander verdreht sind, dass die Spreizsegmente (15) des äusseren Rohrabschnitts (14) die Längsschlitze (13) zwischen den Spreizsegementen (12) des inneren Rohrabschnitts (11) überdecken.

8. Hinterschnittdübel nach einem der Ansprüche 1 - 6, **dadurch gekennzeichnet, dass** die Überdeckung (I) benachbarter Spreizsegmente (5a - 5d) derart gewählt ist, dass eine der Längskanten (8) eines Spreizsegments sichtbar und seine zweite Längskante (9) überdeckt ist.

9. Hinterschnittdübel nach Anspruch 8, **dadurch gekennzeichnet, dass** die Hülse (3) drehend-schlagend auf das Kopfteil (2) auftreibbar ist, wobei die in Drehrichtung (D) vorlaufende Längskante eines Spreizsegments (5a - 5d) die sichtbare Längskante (8) ist.

10. Hinterschnittdübel nach einem der vorangehenden Ansprüche, **dadurch gekennzeichnet, dass** die in Drehrichtung (D) vorlaufende Längskante (8) wenigstens eines der Spreizsegmente (5a - 5d) mit Schneiden (17) ausgestattet ist.

**Claims**

1. Undercut wall fixing comprising an anchor rod featuring a shank (1) with a head section (2) which broadens conically in the direction of placement (S), and a sleeve (3) surrounding the shank (1), which sleeve is provided, on its expansion section (4) facing the head section (2), with expansion segments (5a - 5d) which are separate from one another, extend from a plastic joint (6) in the direction of the head section and are adapted to be radially exposed by an axial relative movement between the head section (2) and the sleeve (3), **characterised in that** neighbouring expansion segments (5a, 5b; 5b, 5c; 5c, 5d; 5a) overlap their longitudinal edges (8, 9) over at least part of their longitudinal extension in the unexpanded initial state, the overlap (1) being adapted to be reduced when the expansion segments (5a - 5d) are radially exposed.

2. Undercut wall fixing according to claim 1, **characterised in that** the expansion segments (5a - 5d) feature an overlap (1) which increases towards their free front extremity (7).

3. Undercut wall fixing according to claim 2, **characterised in that** the overlap (1) of the expansion segments (5a - 5d) is such that in their fully radially exposed extreme position the longitudinal edges (8, 9) of the expansion segments (5a - 5d) are contiguous with one another in a largely gap-free manner, thereby cancelling out the overlapping (1) of neighbouring expansion segments.

4. Undercut wall fixing according to any of the preceding claims, **characterised in that** the material thickness (w) of the expansion segments (5a - 5d) decreases from the plastic joint (6) to their free front extremity (7).

5. Undercut wall fixing according to claim 4, **characterised in that** the material thicknesses (w) of the expansion segments (5a - 5d) on the plastic joint (6) and on the free front extremity (7) are in a ratio of approximately 1.5:1 to 10:1, preferably 2:1 to 5:1.

6. Undercut wall fixing according to claim 4 or 5, **characterised in that** the change in material thickness of the expansion segments (5a - 5d) is made by cold forming, with their free front extremities (7) preferably being work-hardened.

7. Undercut wall fixing according to any one of claims 1 to 6, **characterised in that** the sleeve (3) includes at least two concentric tube sections (11, 14) featuring expansion sections with expansion segments (12, 15) separated from one another by longitudinal slots (13, 16), the tube sections (11, 14) being twisted relative to one another circumferentially in such a manner that the expansion segments (15) of the outer tube section (4) overlap the longitudinal slots (13) between the expansion segments (12) of the inner tube section (11).

8. Undercut wall fixing according to any of claims 1 to 6, **characterised in that** the overlap (1) of neighbouring expansion segments (5a - 5d) is such that one of the longitudinal edges (8) of an expansion segment is visible and its second longitudinal edge (9) is covered.

9. Undercut wall fixing according to claim 8, **characterised in that** the sleeve (3) is adapted to be driven in a rotary percussive action onto the head section (2), the leading longitudinal edge, in the direction of rotation (D), of an expansion segment (5a - 5d) being the visible longitudinal edge (8).

10. Undercut wall fixing according to any of the preceding claims, **characterised in that** the leading longitudinal edge (8), in the direction of rotation (D), of at least one of the expansion segments (5a - 5d) is equipped with cutting edges (17).

**Revendications**

1. Cheville à dépouille comprenant une tige d'ancrage qui comporte une tige (1) avec une partie de tête (2) s'élargissant en forme de cône, dans le sens d'enfoncement (S), ainsi qu'une douille (3) qui entoure la tige (1) et qui est pourvue, au niveau de sa portion expansible (4) tournée vers la partie de tête (2), de segments expansibles (5a-5d) qui sont séparés les uns des autres, qui s'étendent depuis une articulation plastique (6) en direction de la partie de tête (2) et qui peuvent se déployer radialement sous l'effet d'un déplacement relatif axial, entre la partie de tête (2) et la douille (3), **caractérisée en ce que** des segments expansibles (5a-5b ; 5b-5c ; 5c-5d ; 5d-5a) voisins se recouvrent, à l'état initial non expansé, au moins sur une partie de leur étendue longitudinale, sur leurs bords longitudinaux (8, 9), le recouvrement (1) pouvant être réduit lorsque les segments expansibles (5a-5d) sont déployés radialement.

2. Cheville à dépouille selon la revendication 1, **caractérisée en ce que** les segments expansibles (5a-5d) présentent un recouvrement (1) qui augmente vers leur extrémité avant libre (7).

3. Cheville à dépouille selon la revendication 2, **caractérisée en ce que** le recouvrement (1) des segments expansibles (5a-5d) est choisi de manière que les bords longitudinaux (8, 9) des segments expansibles (5a-5d) soient adjacents les uns aux autres, pratiquement sans fente, dans leur position terminale totalement déployée radialement, le recouvrement (1) des segments expansibles voisins étant supprimé.

4. Cheville à dépouille selon l'une des revendications précédentes, **caractérisée en ce que** l'épaisseur de paroi (w) des segments expansibles (5a-5d) diminue depuis l'articulation plastique (6) vers leur extrémité avant libre (7).

5. Cheville à dépouille selon la revendication 4, **caractérisée en ce que** les épaisseurs de paroi (w) des segments expansibles (5a-5d) au niveau de l'articulation plastique (6) et au niveau de l'extrémité avant libre (7) sont dans un rapport d'environ 1,5:1 à 10:1, de préférence de 2:1 à 5:1.

6. Cheville à dépouille selon la revendication 4 ou 5, **caractérisée en ce que** la variation de l'épaisseur de la paroi des segments expansibles (5a-5d) est réalisée par formage à froid, leurs extrémités libres avant (7) étant de préférence écrouies.

7. Cheville à dépouille selon des revendications 1 à 6, **caractérisée en ce que** la douille (3) comprend au moins deux portions tubulaires concentriques (11, 14) qui comportent des portions expansibles avec des segments expansibles (12, 15) séparés les uns des autres par des fentes longitudinales (13, 16), les portions tubulaires (11, 14) étant tournées l'une par rapport à l'autre dans la direction périphérique de manière que les segments expansibles (15) de la portion tubulaire extérieure (14) recouvrent les fentes longitudinales (13) entre les segments expansibles (12) de la portion tubulaire intérieure (11).

8.  Cheville à dépouille selon l'une des revendications 1 à 6, **caractérisée en ce que** le recouvrement (1) de segments expansibles (5a-5d) voisins est choisi de manière que l'un des bords longitudinaux (8) d'un segment expansible soit visible et que son deuxième bord longitudinal (9) soit recouvert.

9.  Cheville à dépouille selon la revendication 8, **caractérisée en ce que** la douille (3) peut être enfoncée par rotation et percussion sur la partie de tête (2), le bord longitudinal avant, dans le sens de rotation (D) d'un segment expansible (5a-5d), étant le bord longitudinal visible (8).

10. Cheville à dépouille selon l'une des revendications précédentes, **caractérisée en ce que** le bord longitudinal (8) avant, dans le sens de rotation (D) d'au moins l'un des segments expansibles (5a-5d), est équipé de taillants (17).

*Fig. 2*

*Fig. 1*

9

EP 0 889 250 B1

Fig. 4.

Fig. 3.

10

Fig. 5

Fig. 6

Fig. 7

EP 0 889 250 B1